# EUROPEAN PATENT SPECIFICATION

(11) **EP 4 156 613 B1**
(45) Date of publication and mention of the grant of the patent: **25.12.2024**
(21) Application number: 20938292.8
(22) Date of filing: 29.05.2020
(51) Int. Cl.: H04L 47/24, H04W 76/11, H04L 41/14, H04L 43/026

(54) **DATA TRANSMISSION METHOD AND DEVICE, AND STORAGE MEDIUM**
DATENÜBERTRAGUNGSVERFAHREN UND -VORRICHTUNG SOWIE SPEICHERMEDIUM
PROCÉDÉ ET DISPOSITIF DE TRANSMISSION DE DONNÉES, ET SUPPORT DE STOCKAGE

(43) Date of publication of application: 29.03.2023
(73) Proprietor: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Taor, Simon Edward William
(86) International application number: PCT/CN2020/093498
(87) International publication number: WO 2021/237728

(56) References cited:
- WO-A1-2019/140650
- CN-A- 109 818 917
- CN-A- 110 557 846
- CN-A- 110 602 724
- CN-A- 111 200 565
- CN-A- 112 087 737
- US-A1- 2011 222 432
- US-A1- 2020 351 819
- CONVIDA WIRELESS: "SDAP Header Format", vol. RAN WG2, no. Berlin, Germany; 20170821 - 20170825, 20 August 2017 (2017-08-20), XP051319246, Retrieved from the Internet <URL:http://www.3gpp.org/ftp/Meetings_3GPP_SYNC/RAN2/Docs/> [retrieved on 20170820]
- 3GPP: "System Architecture for the 5G System; Stage 2 (Release 16)", 3GPP TS 23.501 V16.0.0 (2019-03), 28 March 2019 (2019-03-28), XP051722957

## Description

### TECHNICAL FIELD

The present application relates to the field of wireless communication technologies, and in particular, to a method for data transmission, and an electronic device.

### BACKGROUND

In the related art, the user plane data needs to be sent to an external application server through the network protocol address of the application server, which limits the application scope of the user plane data.

Documents WO2019/140650 A1 and US2011/222432 A1 disclose RAN entities using identifier for data packet transmission.

### SUMMARY

The invention is set out in the appended set of claims. Embodiments of the present application provide a data transmission method and device, which can expand the application scope of user plane data.

The data transmission method and device provided by the embodiments of the present application include: transmitting, by a mobile network element, a first identifier to a terminal device (User Equipment, UE), or a network device, or a UPF entity, so that the terminal device, or network device, or the UPF entity can know the purpose (function) of the first identifier, and then the terminal device, or the network device, or the UPF entity can transfer data packets with the network element corresponding to the first identifier, so that the mobile network element can realizes data applications such as big data analysis and network status monitoring according to the user plane data, which improves the application scope of the data.

### BRIEF DESCRIPTION OF THE DRAWINGS

FIG. 1 is a schematic diagram of the terminal device transmitting uplink data of the application;
FIG. 2 is a schematic diagram of the binding process of the QoS data flow in the PDU session of the application;
FIG. 3 is a schematic diagram of a user plane protocol stack of the present application;
FIG. 4 is a schematic flowchart of the process of transmitting a data packet by a terminal device through a PUD session of the application;
FIG. 5 is a schematic diagram of the composition structure of a communication system according to an embodiment of the present application;
FIG. 6 is a schematic diagram of an optional processing flow of a data transmission method according to an example not claimed by the invention;
FIG. 7 is a schematic diagram of another optional processing flow of the data transmission method according to the embodiment of the present application;
FIG. 8 is a schematic diagram of another optional processing flow of the data transmission method according to an example not claimed by the invention;
FIG. 9 is a schematic diagram of a detailed processing flow of a data transmission method according to an embodiment of the present application;
FIG. 10 is a schematic diagram of a data transmission method for scenario 1 according to an embodiment of the present application;
FIG. 11 is a schematic diagram of a data transmission method for scenario 2 according to an embodiment of the present application;
FIG. 12 is a schematic diagram of a data transmission method for scenario 3 according to an embodiment of the present application;
FIG. 13 is a schematic diagram of a data transmission method for scenario 4 according to an embodiment of the present application;
FIG. 14 is a schematic diagram of an optional composition structure of a mobile network element according to an example not claimed by the invention;
FIG. 15 is a schematic diagram of an optional composition structure of an electronic device according to an embodiment of the present application;
FIG. 16 is a schematic diagram of an optional composition structure of a user plane functional entity according to an example not claimed by the invention; and
FIG. 17 is a schematic diagram of a hardware composition structure of a device according to an example not claimed by the invention.

### DETAILED DESCRIPTION

In order to be able to understand the features and technical contents of the embodiments of the present application in more detail, the implementation of the embodiments of the present application will be described in detail below with reference to the accompanying drawings.

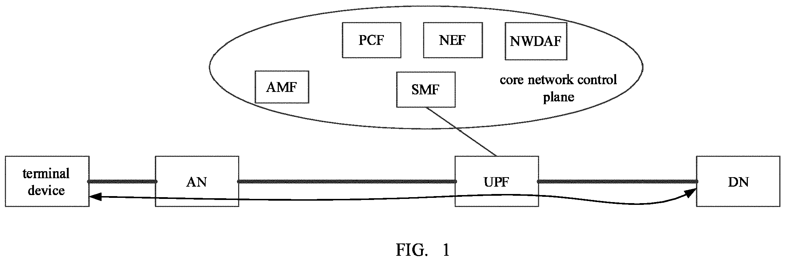

In the related art, a terminal device establishes a protocol data unit (Protocol Data Unit, PDU) session by interacting with the control plane network element of the core network, that is, establishes a connection between the terminal device and a user plane function (User Plane Function, UPF) entity. As shown in FIG. 1, when the terminal device transmits uplink data, it can be sent to the UPF entity through the protocol of the PDU session. The UPF entity performs next-hop routing according to the internet protocol (IP) address of the target server, and finally transmits the data packet to an application server, such as a server on a Data Network (DN). For downlink data, after receiving the data packet from the DN, the UPF entity determines to bind to the corresponding PDU session according to the downlink target IP address, and sends data to the terminal device through the PDU session.

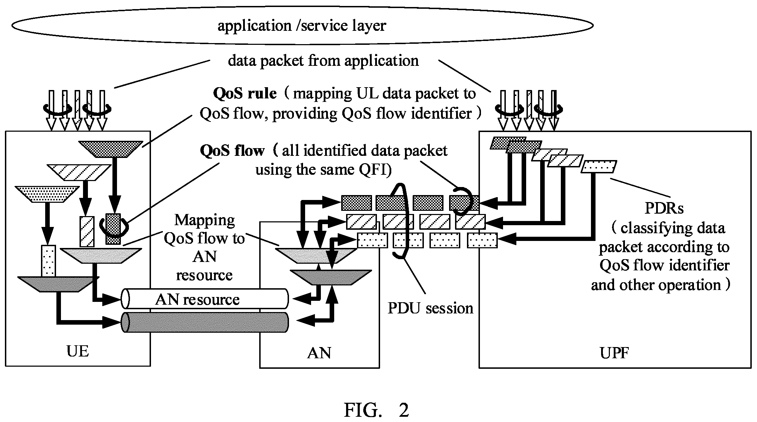

In order to guarantee data transmission, mobile networks usually use Quality of Service (QoS) mechanisms. A set of QoS parameters can be used for data transmission of one or more QoS data flows or bearers. Therefore, it is necessary to bind the QoS data flow and the DRB. The binding process of the QoS data flow in the PDU session is shown in FIG. 2. One or more QoS flows can be mapped to a data radio bearer (DRB) for transmission. The connection between the terminal device and the access network (AN) device (e.g., a network device) as shown in FIG. 2 may be referred to as a DRB transmission.

When binding the QoS data flow, the uplink QoS data flow is bound by the terminal device. The terminal device determines which QoS data flow different data packets need to be bound to for transmission according to QoS rules. The downlink QoS data flow is bound by the UPF entity. The UPF entity determines which QoS data flow different data packets need to be bound to for transmission according to the PDR rule.

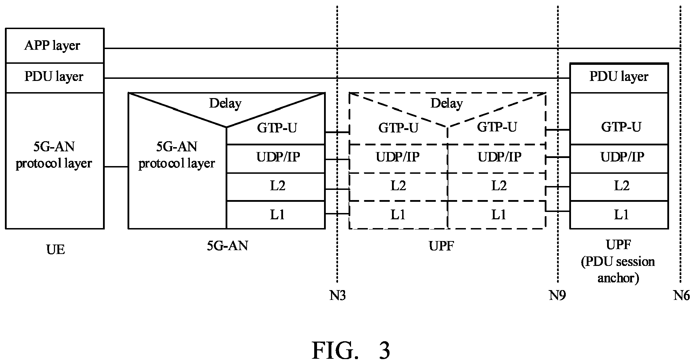

The schematic diagram of the user plane protocol stack is shown in FIG. 3, duplication/de-duplication is performed at the GPRS Tunnelling Protocol (GTP-U) layer on the UPF. The terminal side performs duplication/de-duplication at the service data adaptation protocol (SDAP) or packet data convergence protocol (PDCP) layer. AN device needs to perform protocol conversion operations.

The QoS flow identifier (Identify, ID) is added between the terminal device and the AN device through the SDAP header, and the QFI identifier is added to the GTP-U header between the AN device and the UPF entity. Therefore, the terminal device, the AN device and the UPF entity can all know which QoS flow the data packet corresponds to. In some cases, the corresponding QoS flow can be known between the terminal device and the AN device according to the mapping relationship between the DRB and the QoS flow. In this scenario, it is unnecessary to explicitly add the QFI identifier to the SDAP packet header.

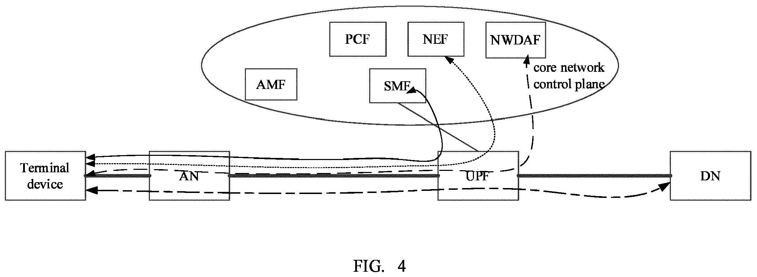

With the increasing demand for big data in operator networks and the rise of edge computing (EC) services, the applicant found that some user plane data packets are required to be forwarded to the core network control plane network elements instead of being transmitted to the external application server. These data can be used for big data analysis, network status monitoring and other purposes. The process of sending data packets through a PUD session by a terminal device is shown in FIG. 4. When the user plane data packet is required to be forwarded to the core network control plane network element, the terminal device can send the data packet by a PDU session to different core network elements, such as session management function (SMF) entity, network exposure function (NEF) entity, or network data analysis function (NWDAF) entity.

The technical solutions of the embodiments of the present application can be applied to various communication systems, for example: global system of mobile communication (GSM) system, code division multiple access (CDMA) system, wideband code division multiple access (WCDMA) system, general packet radio service (GPRS), long term evolution (LTE) system, LTE frequency division duplex (FDD) system, LTE time division duplex (TDD) systems, advanced long term evolution (LTE-A) systems, new radio (NR) systems, evolution systems for NR systems, LTE-based access to unlicensed spectrum (LTE-U) system, NR-based access to unlicensed spectrum (NR-U) system, universal mobile telecommunication system (UMTS), global Worldwide interoperability for microwave access (WiMAX) communication systems, wireless local area networks (WLAN), wireless fidelity (WiFi), next-generation communication systems or other communication systems, etc.

The system architecture and service scenarios described in the embodiments of the present application are for the purpose of illustrating the technical solutions of the embodiments of the present application more clearly. With the evolution of the architecture and the emergence of new business scenarios, the technical solutions provided in the embodiments of the present application are also applicable to similar technical problems.

The network device involved in the embodiments of the present application may be a common base station (such as a NodeB or eNB or gNB), a new radio controller (NR controller), a centralized unit, a new radio base station, remote radio module, micro base station, relay (relay), distributed unit (distributed unit), transmission reception point (TRP), transmission point (TP) or any other equipment. The embodiments of the present application do not limit the specific technology and specific device form adopted by the network device. For the convenience of description, in all the embodiments of this application, the above-mentioned apparatuses for providing wireless communication functions for terminal equipment are collectively referred to as network equipment.

In this embodiment of the present application, the terminal device may be any terminal, for example, the terminal device may be user equipment of machine type communication. That is to say, the terminal device may also be referred to as user equipment UE, mobile station (MS), mobile terminal (mobile terminal), terminal, etc. The terminal device may communicate with one or more core network elements through the radio access network (RAN). For example, the terminal device may be a mobile phone (or "cellular" phone), a computer with a mobile terminal, etc., and for example, the terminal device may also be a portable, packetable, handheld, computer built-in or vehicle mounted mobile devices that exchange language and/or data with the radio access network. There is no specific limitation in the embodiments of the present application.

Optionally, network device and terminal device can be deployed on land, including indoor or outdoor, handheld or vehicle-mounted. They can also be deployed on surface, or in air such as on aircraft, balloons and artificial satellites. The embodiments of the present application do not limit the application scenarios of the network device and the terminal device.

Optionally, communication between a network device and a terminal device and between a terminal device and a terminal device can be performed through licensed spectrum (licensed spectrum), or through unlicensed spectrum (unlicensed spectrum), or through both licensed spectrum and unlicensed spectrum. Communication between network device and terminal device and between terminal device and terminal device can be carried out through the spectrum below 7 gigahertz (GHz), or through the frequency spectrum above 7 GHz, or both the frequency spectrum below 7 GHz and the frequency spectrum above 7GHz at the same time. The embodiments of the present application do not limit the spectrum resources used between the network device and the terminal device.

Generally speaking, traditional communication systems support a limited number of connections and are easy to implement. However, with the development of communication technology, mobile communication systems will not only support traditional communication, but also support, for example, device to device (D2D) communication, machine to machine (M2M) communication, machine type communication (MTC), and vehicle to vehicle (V2V) communication, etc., the embodiments of the present application can also be applied to these communication system.

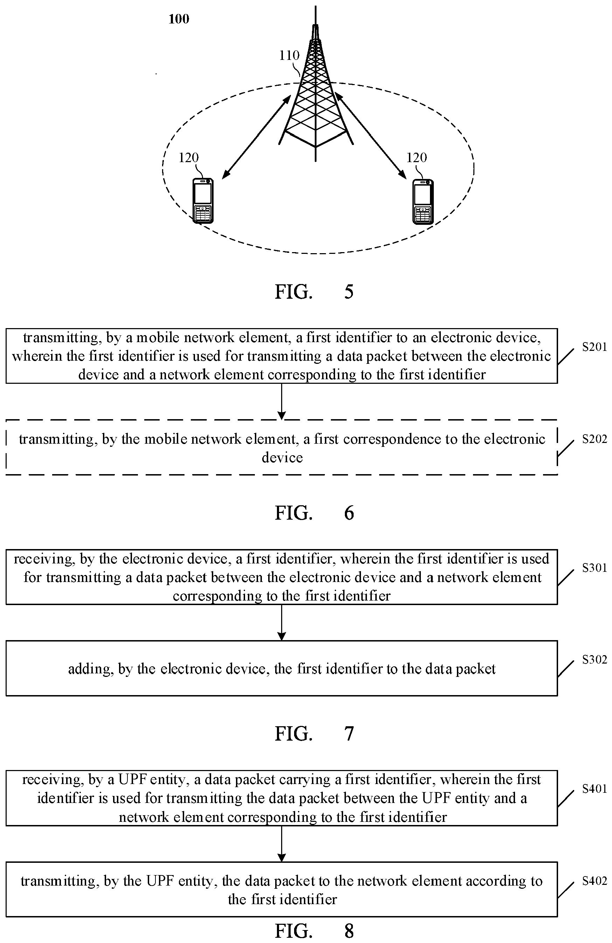

Exemplarily, the communication system 100 applied in this embodiment of the present application is shown in FIG. 5. The communication system 100 may include a network device 110, and the network device 110 may be a device that communicates with a terminal device 120 (or referred to as a communication terminal, a terminal). The network device 110 may provide communication coverage for a particular geographic area and may communicate with terminal devices located within the coverage area. Optionally, the network device 110 may be a base station (Base Transceiver Station, BTS) in a GSM system or a CDMA system, a base station (NodeB, NB) in a WCDMA system, or an evolved base station in an LTE system (Evolutional Node B, eNB or eNodeB), or a wireless controller in a cloud radio access network (CRAN), or the network device can be a mobile switching center, relay station, access point, on-board equipment, wearable devices, hubs, switches, bridges, routers, network-side devices in 5G networks, or network devices in the future evolved Public Land Mobile Network (PLMN), etc.

The communication system 100 also includes at least one terminal device 120 located within the coverage of the network device 110. "Terminal device" as used herein includes, but is not limited to, a device configured to receive/transmit communication signal through a wired line such as public switched telephone networks (PSTN), digital subscriber line (DSL), digital cable, direct cable connections and/or another data connection/network; and/or through wireless interface such as cellular network, wireless local area network (WLAN), digital television network such as DVB-H network, satellite network, AM-FM broadcast transmitter, and/or another terminal device; and/or an Internet of Things (IoT) device. The terminal device configured to communicate via the wireless interface may be referred to as a "wireless communication terminal", "wireless terminal" or "mobile terminal". Examples of mobile terminals include, but are not limited to, a satellite or cellular telephone; a personal communications system (PCS) terminal that may combine cellular radio telephones with data processing, facsimile, and data communications capabilities; a PDA that may include radio telephones, pagers, Internet/Intranet access, web browser, memo pad, calendar, and/or global positioning system (GPS) receiver; and conventional laptop and/or palmtop receivers or other electronic devices including radiotelephone transceiver. The terminal device may refer to an access terminal, user equipment subscriber unit, subscriber station, mobile site, mobile station, remote station, remote terminal, mobile device, user terminal, terminal, wireless communication device, user agent, or user equipment. The access terminal may be a cellular phone, a cordless phone, a session initiation protocol (SIP) phone, a wireless local loop (WLL) station, a personal digital assistant (PDA), a wireless handheld device with communication function, a computing device or other processing device connected to wireless modems, in-vehicle devices, wearable devices, terminal devices in 5G networks or in future evolved PLMNs, etc.

Optionally, device to device (D2D) communication may be performed between the terminal devices 120.

Optionally, the 5G system or 5G network may also be referred to as a new radio (New Radio, NR) system or an NR network.

FIG. 5 exemplarily shows one network device and two terminal devices. Optionally, the communication system 100 may include multiple network devices and the coverage of each network device may include other numbers of terminal devices, which is not limited by the embodiment of the present application.

Optionally, the communication system 100 may further include other network entities such as a network controller and a mobility management entity, which are not limited in this embodiment of the present application.

It should be understood that, in the embodiments of the present application, a device having a communication function in the network/system may be referred to as a communication device. Taking the communication system 100 shown in FIG. 5 as an example, the communication device may include a network device 110 and a terminal device 120 with a communication function, and the network device 110 and the terminal device 120 may be the specific devices described above, which will not be repeated here. The communication device may also include other devices in the communication system 100, such as other network entities such as a network controller, a mobility management entity, etc., which are not limited in this embodiment of the present application.

An optional processing flow of the data transmission method provided by an example not claimed by the invention, as shown in FIG. 6, may include the following steps.

Step S201, transmitting, by a mobile network element, a first identifier to an electronic device, wherein the first identifier is used for transmitting a data packet between the electronic device and a network element corresponding to the first identifier.

In some embodiments, the electronic device may add the first identifier to the data packet, and transmit it to the UPF entity, and the UPF entity transmits the first identifier to the corresponding network element according to the first identifier. In other embodiments, when the UPF entity receives the data packet transmitted by the corresponding network element, the first identifier is determined according to the network element that transmits the data packet, and is added to the data packet (for example, packet header of a certain protocol layer of the data packet) and transmitted to the electronic device.

In some embodiments, the first identifier may be an existing identifier, such as a quality of service flow identifier (QoS Flow ID) and/or a protocol data unit session identifier (PDU Session ID). Alternatively, the first identifier is a new identifier, such as a service identifier, a server identifier, and the like.

In some embodiments, the first identifier is carried in a QoS parameter. The QoS parameter may be the content in a QoS profile, that is, the first identifier may be used as a part of the QoS profile. The first identifier may be a part of the QoS parameter, and the first identifier may also be indirectly determined according to the QoS parameter. For example, the first identifier is the QFI determined according to the 5G QoS Index (5QI) parameter in the QoS Profile.

In some embodiments, the QoS parameter may include but not limited to, one or more of the following: a packet filter, a guaranteed rate (Garanteed Biterate), and a non-guaranteed rate (Non-Garanteed Biterate), a maximum bit Rate, a packet delay budget, a packet error rate, a 5QI and a preemption priority parameter. The packet filter may include one or more of the following: IP5 tuple, Type of Service (IPV4)/Traffic class (IPV6), and data flow direction.

In some embodiments, the first identifier is sent as a parameter independent of the QoS parameter, that is, the first identifier is not content in the QoS profile.

In some embodiments, the usage (function) of the first identifier may be configured in a dynamic or static manner, that is, a mobile network element may configure the usage of the first identifier to the electronic device in a dynamic or static manner. Alternatively, the usage of the first identifier may also be default. In the case where the usage of the first identifier is a default, the usage of the first identifier may be determined through negotiation between devices, or pre-agreed, or defined through a standard protocol such as 3GPP. The usage of the first identification includes transmitting data between the electronic device and a specific network element according to the first identification; or the usage of the first identification includes executing a specific service according to the first identification, and transmitting data to the corresponding network element according to the service, such as the electronic device transmitting the data to the UPF entity, the UPF entity transmitting the data to the SMF entity according to the first identifier, and the SMF entity transmitting the data to the EC server; or the electronic device transmitting the data to the UPF entity, the UPF entity transmitting the data to the NEF entity according to the first identifier, and the NEF entity transmitting the data to the EC server; or the electronic device transmitting the data to the NWDAF entity, and the NWDAF entity processes the data, such as data analysis, hash mapping, etc.; or the electronic device transmitting the data to a domain name system (DNS) entity, and the DNS entity being used for DNS query services.

In some embodiments, the first identifier is carried in the N2 message and/or the NAS message. The N2 message may be a message used for transmitting information between the core network element and the RAN node. The NAS message may be a message used for transmitting information between the core network element and the terminal device, and the message may be pass-through to the terminal device through the RAN.

In some embodiments, the network element includes an NEF entity, and in other examples not covered by the invention, the network element may also include at least any one of the following: an NWDAF entity, a PCF entity, an NWDAF entity corresponding to a first network slice, and a user data management (UDM) entity. The electronic device may be at least one of a terminal device, a wireless network device, a core network device, and a UPF entity. The mobile network element may be a core network element, and the core network element is an SMF entity, and in other examples not covered by the invention, the core network element may also be an AMF entity, or a PCF entity or the like.

The NWDAF entity can be used for big data collection, big data analysis and distribution of analysis results. The NEF entity can be used for network capability opening, and the interaction between the information of the mobile network and a medical server can be realized through the NEF entity. The PCF entity can be used for policy management on the terminal device side and the network device side. The UDM entity can be used for the management of user subscription information. The SMF entity can be used for session management. The AMF entity can be used for mobility management.

In some embodiments, the method may further include:

Step S200, receiving, by the mobile network element, a first request message, wherein the first request message is used to request to acquire the first identifier.

In some embodiments, the mobile network element receives the first request message sent by the electronic device, where the first request message is used to request the mobile network element to transmit the first identifier to the electronic device.

In some embodiments, the method may further include:

Step S202, transmitting, by the mobile network element, a first correspondence to the electronic device.

In some embodiments, the mobile network element transmits the first correspondence to the electronic device, and the electronic device may be at least one of a terminal device, a network device, and a UPF entity.

In some embodiments, the first correspondence may be carried in a QoS parameter. The QoS parameter may be content in a QoS profile, that is, the first correspondence may be used as a part of the QoS profile. The first correspondence is a part of the QoS parameter, and the first correspondence may also be indirectly determined according to the QoS parameter. For example, the first correspondence is the QFI determined according to the 5QI parameter in the QoS profile. Alternatively, the first correspondence is sent as a parameter independent of the QoS parameter.

In some embodiments, the first correspondence is carried in the N2 message and/or the NAS message. The N2 message may be a message used for transmitting information between the core network element and the RAN node, and the NAS message may be a message used for transmitting information between the core network element and the terminal device, which may be pass-through to the terminal device through the RAN.

In some embodiments, the first correspondence includes: a correspondence between the first identifier and the network element, and/or a correspondence between the first identifier and a service.

For the correspondence between the first identifier and the network element, it may be that the identifier-1 corresponds to the NWDAF entity, the identifier-2 corresponds to the NEF entity, the identifier-3 corresponds to the PCF entity, the identifier-4 corresponds to the NWDAF entity of the first network slice, and the identifier-5 corresponds to the NWDAF entity of the second network slice, and the like. The NWDAF entity can exist alone, or can be co-located with other existing network elements, such as co-located with one of UPF entity, SMF entity, and NEF entity. The NEF entity can exist alone, or can be co-located with other existing network elements, such as co- located with the UPF entity.

For the correspondence between the first identifier and the service, it may be that the identifier-1 corresponds to the data analytics service, the identifier-2 corresponds to the local area network (LAN) service, the identifier-3 corresponds to the edge computing service, the identifier-4 corresponds to DNS service, and the identifier-5 corresponds to network information notification service.

In some embodiments, the method may further include:

Step S202', receiving, by the mobile network element, a second request message, wherein the second request message is used to request to acquire the first correspondence.

In some embodiments, the mobile network element receives the second request message sent by the electronic device, wherein the second request message is used to request the mobile network element to send the first correspondence to the electronic device.

It should be noted that the data transmission method provided by the embodiments of the present application can be applied to scenarios such as a PDU session establishment process, a PDU session modification process, a registration process, and a service request process.

Another optional processing flow of the data transmission method provided by the embodiment of the present application, as shown in FIG. 7, includes the following steps:

Step S301, receiving, by the electronic device, a first identifier, wherein the first identifier is used for transmitting a data packet between the electronic device and a network element corresponding to the first identifier.

In some embodiments, the electronic device receives the first identifier sent by the mobile network element.

In some embodiments, the electronic device may be a terminal device and/or a network device, and the mobile network element is an SMF entity, and in other examples not covered by the invention, the mobile network element may also be an AMF entity, or a PCF entity, or the like.

In some embodiments, the first identifier may be an existing identifier, such as QoS Flow ID and/or PDU Session ID. Alternatively, the first identifier is a new identifier, such as a service identifier, a server identifier, and the like.

In some embodiments, the first identifier is carried in a QoS parameter. The QoS parameter may be the content in a QoS profile, that is, the first identifier may be used as a part of the QoS profile. The first identifier may be explicitly carried in the QoS parameter, and the first identifier may also be indirectly determined according to the QoS parameter. For example, the first identifier is the QFI determined according to the 5QI parameter in the QoS profile.

In some embodiments, the electronic device may indirectly determine the service or server corresponding to the data flow according to the QoS parameter. For example, the service or server corresponding to the data flow is determined according to the 5QI parameter in the QoS profile. The corresponding relationship may be configured on the electronic device by default (for example, by means of standardized definition or pre-configuration).

In some embodiments, the first identifier is sent as a parameter independent of the QoS parameter, that is, the first identifier is not content in the QoS profile.

In some embodiments, the QoS parameters may include, but are not limited to, one or more of the following: packet filter, Garanteed Biterate, Non-Garanteed Biterate, Maximum Bit Rate, Packet Delay Budget, Packet Error Rate, 5QI, and Preemption priority parameter. The packet filter may include one or more of the following: IP5 tuple, Type Of Service (IPV4)/Traffic class (IPV6), and data flow direction.

In some embodiments, the usage (function) of the first identifier may be configured in a dynamic or static manner, that is, a mobile network element may configure the usage of the first identifier to the electronic device in a dynamic or static manner. Alternatively, the usage of the first identifier may also be default. In the case where the usage of the first identifier is a default, the usage of the first identifier may be determined through negotiation between devices, or pre-agreed, or defined through a standard protocol such as 3GPP. The usage of the first identification includes transmitting data with a specific network element according to the first identification; or the usage of the first identification includes executing a specific service according to the first identification, and transmitting data to the corresponding network element according to the service, such as the electronic device transmitting the data to the UPF entity, the UPF entity transmitting the data to the SMF entity according to the first identifier, and the SMF entity transmitting the data to the EC server; or the electronic device transmitting the data to the UPF entity, the UPF entity transmitting the data to the NEF entity according to the first identifier, and the NEF entity transmitting the data to the EC server; or the electronic device transmitting the data to the NWDAF entity, and the NWDAF entity processes the data, such as data analysis, hash mapping, etc.; or the electronic device transmitting the data to a DNS entity, and the DNS entity being used for DNS query services.

In some embodiments, the first identifier is carried in the N2 message and/or the NAS message. The N2 message may be a message used for transmitting information between the core network element and the RAN node. The NAS message may be a message used for transmitting information between the core network element and the terminal device, and the message may be pass-through to the terminal device through the RAN.

In some embodiments, the network element includes an NEF entity, and in other examples not covered by the invention, the network element may also include at least any one of the following: an NWDAF entity, a PCF entity, an NWDAF entity corresponding to a first network slice, and a UDM entity. The electronic device may be at least one of a terminal device, a network device, and a UPF entity. The mobile network element is an SMF entity, and in other examples not covered by the invention, the mobile network element may also be an AMF entity, or a PCF entity or the like.

The NWDAF entity can be used for big data collection, big data analysis and distribution of analysis results. The NEF entity can be used for network capability opening, and the interaction between the information of the mobile network and a medical server can be realized through the NEF entity. The PCF entity can be used for policy management on the terminal device side and the network device side. The UDM entity can be used for the management of user subscription information. The SMF entity can be used for session management. The AMF entity can be used for mobility management.

For the transmission of data packets between the electronic device and the network element corresponding to the first identifier, in some embodiments, the electronic device may add the first identifier to the data packet and transmit it to the UPF entity, and the UPF entity may, according to the first identifier, transmit it to the corresponding network element. In other embodiments, when the UPF entity receives the data packet transmitted by the corresponding network element, the first identifier is determined according to the network element that transmits the data packet, and is added to the data packet (packet header of a certain protocol layer of the data packet) and transmitted to the electronic device.

Step S302, adding, by the electronic device, the first identifier to the data packet.

In some embodiments, the electronic device adds the first identifier to the data packet, and transmits the data packet to a UPF entity, and the UPF entity transmits the data packet according to the first identification to the corresponding network element, such as a mobile network element (core network element), a terminal device, a network device, a functional module inside the UPF entity, an entity co-located with the UPF entity, or another UPF entity other than the UPF entity.

In some embodiments, the method may further include:

Step S300a, transmitting, by the electronic device, a first request message to a mobile network element, wherein the first request message is used to request to acquire the first identifier.

In some embodiments, the first request message is used to request the mobile network element to send the first identifier to the electronic device.

In some embodiments, the method may further include:
Step S300b, receiving, by the electronic device, the first correspondence.

In some embodiments, the electronic device receives the first correspondence sent by a mobile network element, wherein the first correspondence includes: a correspondence between the first identifier and the network element, and/or a correspondence between the first identifier and a service.

In some embodiments, the first correspondence may be carried in a QoS parameter. The QoS parameter may be content in a QoS profile, that is, the first correspondence may be used as a part of the QoS profile. The first correspondence may be a part of the QoS parameter, and the first correspondence may also be indirectly determined according to the QoS parameter. For example, the first correspondence is the QFI determined according to the 5QI parameter in the QoS profile. Alternatively, the first correspondence is sent as a parameter independent of the QoS parameter.

In some embodiments, the first correspondence is carried in the N2 message and/or the NAS message. The N2 message may be a message used for transmitting information between the core network element and the RAN node, and the NAS message may be a message used for transmitting information between the core network element and the terminal device, which may be pass-through to the terminal device through the RAN.

In some embodiments, the first correspondence includes: a correspondence between the first identifier and the network element, and/or a correspondence between the first identifier and a service.

For the correspondence between the first identifier and the network element, it may be that the identifier-1 corresponds to the NWDAF entity, the identifier-2 corresponds to the NEF entity, the identifier-3 corresponds to the PCF entity, the identifier-4 corresponds to the NWDAF entity of the first network slice, and the identifier-5 corresponds to the NWDAF entity of the second network slice, and the like. The NWDAF entity can exist alone, or can be co-located with other existing network elements, such as co-located with one of UPF entity, SMF entity, and NEF entity. The NEF entity can exist alone, or can be co-located with other existing network elements, such as co- located with the UPF entity.

For the correspondence between the first identifier and the service, it may be that the identifier-1 corresponds to the data analytics service, the identifier-2 corresponds to the local area network (LAN) service, the identifier-3 corresponds to the edge computing service, the identifier-4 corresponds to DNS service, and the identifier-5 corresponds to network information notification service.

Step S300b', transmitting, by the electronic device, a second request message to the mobile network element, wherein the second request message is used to request to acquire the first correspondence.

In some embodiments, the second request message is used to request the mobile network element to send the first correspondence to the electronic device.

It should be noted that the data transmission method provided by the embodiments of the present application can be applied to scenarios such as a PDU session establishment process, a PDU session modification process, a registration process, and a service request process.

Another optional processing flow of the data transmission method provided by an example not claimed by the invention, as shown in FIG. 8, includes the following steps:
Step S401, receiving, by a UPF entity, a data packet carrying a first identifier, wherein the first identifier is used for transmitting the data packet between the UPF entity and a network element corresponding to the first identifier.

In some embodiments, the UPF entity receives a data packet transmitted by a network device or a terminal device and carrying the first identifier.

In some embodiments, the first identifier may be an existing identifier, such as QoS Flow ID and/or PDU Session ID. Alternatively, the first identifier is a new identifier, such as a service identifier, a server identifier, and the like.

In some embodiments, the first identifier is carried in a QoS parameter. The QoS parameter may be the content in a QoS profile, that is, the first identifier may be used as a part of the QoS profile. The first identifier may be a part of the QoS parameter, and the first identifier may also be indirectly determined according to the QoS parameter. For example, the first identifier is the QFI determined according to the 5QI parameter in the QoS profile.

In some embodiments, the first identifier is sent as a parameter independent of the QoS parameter, that is, the first identifier is not content in the QoS profile.

In some embodiments, the QoS parameters may include, but are not limited to, one or more of the following: packet filter, Garanteed Biterate, Non-Garanteed Biterate, Maximum Bit Rate, Packet Delay Budget, Packet Error Rate, 5QI, and Preemption priority parameter. The packet filter may include one or more of the following: IP5 tuple, Type Of Service (IPV4)/Traffic class (IPV6), and data flow direction.

In some embodiments, the usage (function) of the first identifier may be configured in a dynamic or static manner, that is, a mobile network element may configure the usage of the first identifier to the electronic device in a dynamic or static manner. Alternatively, the usage of the first identifier may also be default. In the case where the usage of the first identifier is a default, the usage of the first identifier may be determined through negotiation between devices, or pre-agreed, or defined through a standard protocol such as 3GPP. The usage of the first identification includes transmitting data with a specific network element according to the first identification; or the usage of the first identification includes executing a specific service according to the first identification, and transmitting data to the corresponding network element according to the service, such as the electronic device transmitting the data to the UPF entity, the UPF entity transmitting the data to the SMF entity according to the first identifier, and the SMF entity transmitting the data to the EC server; or the electronic device transmitting the data to the UPF entity, the UPF entity transmitting the data to the NEF entity according to the first identifier, and the NEF entity transmitting the data to the EC server; or the electronic device transmitting the data to the NWDAF entity, and the NWDAF entity processes the data, such as data analysis, hash mapping, etc.; or the electronic device transmitting the data to a DNS entity, and the DNS entity being used for DNS query services.

For the data packet transmission between the UPF entity and the network element corresponding to the first identifier, in some embodiments, the electronic device may add the first identifier to the data packet and transmit it to the UPF entity, and the UPF entity may, according to the first identifier, transmit it to the corresponding network element. In other embodiments, when the UPF entity receives the data packet transmitted by the corresponding network element, the first identifier is determined according to the network element that transmits the data packet, and is added to the data packet (packet header of a certain protocol layer of the data packet) and transmitted to the electronic device.

In some embodiments, the method may further include:
Step S400, transmitting, by the UPF entity, a third request message to the mobile network element, wherein the third request message is used to request to acquire the first identifier and/or the first correspondence.

In some embodiments, the first correspondence may be carried in a QoS parameter. The QoS parameter may be content in a QoS profile, that is, the first correspondence may be used as a part of the QoS profile. The first correspondence may be a part of the QoS parameter, and the first correspondence may also be indirectly determined according to the QoS parameter. For example, the first correspondence is the QFI determined according to the 5QI parameter in the QoS profile. Alternatively, the first correspondence is sent as a parameter independent of the QoS parameter.

In some embodiments, the first correspondence is carried in the N2 message and/or the NAS message. The N2 message may be a message used for transmitting information between the core network element and the RAN node, and the NAS message may be a message used for transmitting information between the core network element and the terminal device, which may be pass-through to the terminal device through the RAN.

In some embodiments, the first correspondence includes: a correspondence between the first identifier and the network element, and/or a correspondence between the first identifier and a service.

For the correspondence between the first identifier and the network element, it may be that the identifier-1 corresponds to the NWDAF entity, the identifier-2 corresponds to the NEF entity, the identifier-3 corresponds to the PCF entity, the identifier-4 corresponds to the NWDAF entity of the first network slice, and the identifier-5 corresponds to the NWDAF entity of the second network slice, and the like. The NWDAF entity can exist alone, or can be co-located with other existing network elements, such as co-located with one of UPF entity, SMF entity, and NEF entity. The NEF entity can exist alone, or can be co-located with other existing network elements, such as co- located with the UPF entity.

For the correspondence between the first identifier and the service, it may be that the identifier-1 corresponds to the data analytics service, the identifier-2 corresponds to the local area network (LAN) service, the identifier-3 corresponds to the edge computing service, the identifier-4 corresponds to DNS service, and the identifier-5 corresponds to network information notification service.

Step S402, transmitting, by the UPF entity, the data packet to the network element according to the first identifier.

In some embodiments, the network element includes at least one of the following: a mobile network element (core network element), a terminal device, a network device, a functional module inside the UPF entity, an entity co-located with the UPF entity, or another UPF entity other than said UPF entity.

It should be noted that the data transmission method provided by the embodiments of the present application can be applied to scenarios such as a PDU session establishment process, a PDU session modification process, a registration process, and a service request process.

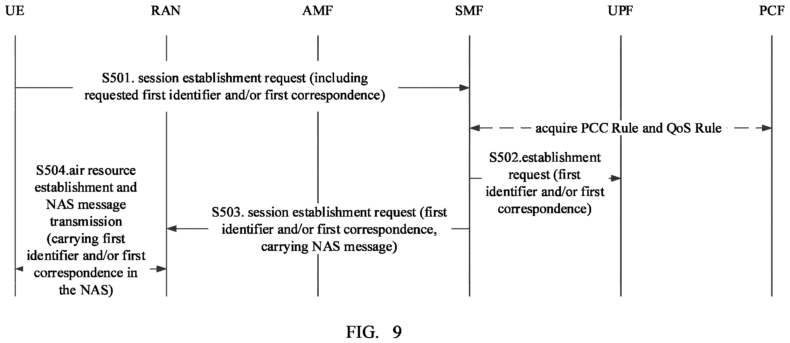

Hereinafter, the PDU session establishment process is taken as an example. During the PDU session establishment (or modification) process, the mobile network element, such as the core network element, informs the terminal device or network device of the first identifier and/or the first correspondence, and the first identifier is required to be added to the packet header of the user plane data packet, so that after the UPF entity detects the first identifier, the data packet is forwarded to the corresponding network element. Before this, optionally, the terminal device may add the requested first identifier and/or the first correspondence in the PDU session request message. The detailed processing flow of the data transmission method provided by the embodiment of the present application, as shown in FIG. 9, includes:
Step S501, transmitting, by the terminal device, a session establishment request to the SMF entity, wherein the session establishment request carries the requested first identifier and/or first correspondence.

Step S502, transmitting, by the SMF entity, an establishing request to the UPF entity.

In some embodiments, in the process of transmitting, by the SMF entity, the establishment request to the UPF entity, the first identifier and/or the first correspondence may be carried.

Step S503, transmitting, by the SMF entity, a session establishment request to the RAN network element, wherein the session establishment request carries the requested first identifier and/or the first correspondence.

In some embodiments, the session establishment request may carry an NAS message.

Step S504, performing, between the RAN network element and the terminal device, air interface resource establishment and NAS message transmission, wherein the NAS message carries the first identifier and/or the first correspondence.

The data transmission methods provided by the embodiments of the present application are described below for different scenarios.

### Scenario 1

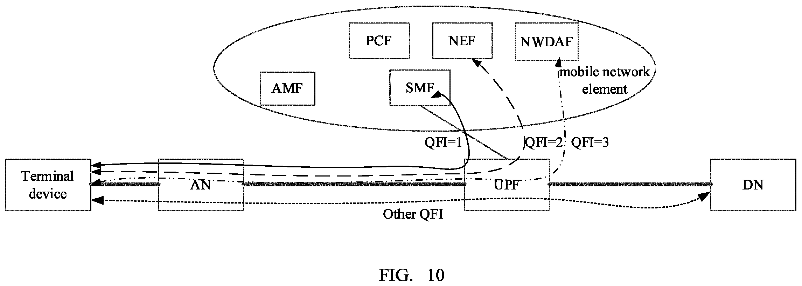

As shown in FIG. 10, in the process of establishing a PDU session, the terminal device obtains three first identifiers from a mobile network element (such as a core network element), which are QFI=1, QFI=2 and QFI=3 respectively. The terminal device transmits data packets to the UPF entity, and binds the data packets sent to different mobile network elements (such as core network control plane network elements) to different QoS flows. In this embodiment, multiple QoS flows may be in a same PDU session or may be in different PDU sessions. The UPF entity parses the QFI in the data packet, and forwards different data packets to different network elements according to the QFI. For example, transmit the data packet bound to the QoS flow with QFI=1 to the SMF entity, transmit the data packet bound to the QoS flow with QFI=2 to the NEF entity, and transmit the data packet bound to the QoS flow with QFI=3 to the NWDAF entity.

### Scenario 2

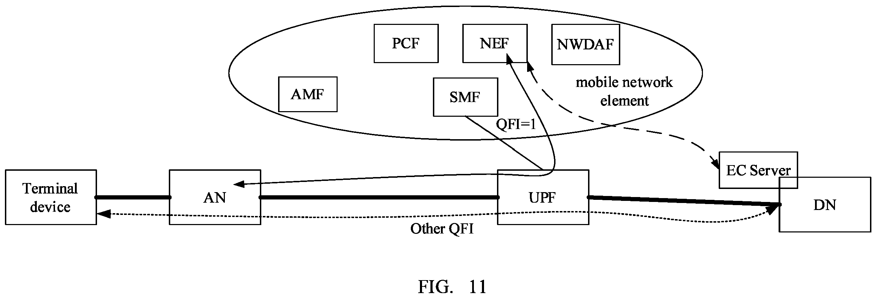

As shown in FIG. 11, the network device (AN node) preconfigures that the data flow of QFI=1 of the first PDU session is used to transmit the network status information to the EC server. After the network status information is transmitted to the NEF entity through the UPF entity, the information is transmitted by the NEF entity to the EC server. The first PDU session may be a session corresponding to a specific network slice and/or DNN, such as a PDU session corresponding to S-NSSAI=1.

The network device transmits data to the UPF entity, the data can be used to notify the EC server of the network status (such as QoS changes). The UPF entity transmits the data packet to the NEF entity according to the identifier of QFI=1 carried in the data packet, and the NEF entity forwards the received data packet to the EC server; or, the network device transmits the data to the UPF entity, the UPF entity transmits the data packet to the SMF entity according to the identifier of QFI=1, and the SMF entity transmits the data packet to the EC server; or the network device transmits the data packet to the UPF entity, the UPF entity transmits the data packet to the NEF entity according to the identifier of QFI=1, and the NEF entity transmits the data packet to the EC server; or the network device directly transmits the data packet to the EC server according to the identifier of QFI=1. The EC server processes the data, such as data analysis after receiving the data packet. Therefore, in the embodiment of the present application, the UPF entity may transmit data to different mobile network elements (e.g., SMF entity, NEF entity, etc.), and the mobile network element transmits the data to the EC server. The UPF entity can also transmit data directly to the EC server.

### Scenario 3

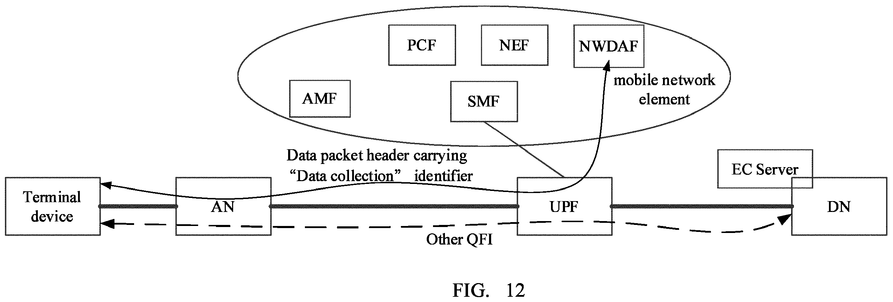

As shown in FIG. 12, during the establishment of the PDU session, the mobile network element (such as the core network element) notifies the terminal device that the first identifier is "Data collection", and the data packet carrying the identifier "Data collection" can be used by the terminal device to collect data, such as the policy implementation of terminal equipment, terminal location information, and parameters related to air interface channel quality.

When the terminal device needs to transmit data, the terminal device carries an identifier: "Data collection" in the header of the data packet carrying the data. The UPF entity forwards the data packet to the mobile network element according to the identifier, such as the NWDAF entity. The NWDAF collects the terminal data and then uses the data for data analysis.

The identifier may be carried in a data packet header (e.g., SDAP data packet header) of a certain layer of the air interface and transmitted to the network device. Alternatively, the network device obtains the service identifier corresponding to the data packet according to the relationship between the DRB and the QoS flow, and the network device adds the QoS flow identifier to the GTP-U packet header and transmit it to the UPF entity. Alternatively, a new protocol layer is introduced between the terminal device and the network element (such as the UPF entity), and the identifier is placed in the header of the new protocol layer and transmitted to the UPF entity.

### Scenario 4

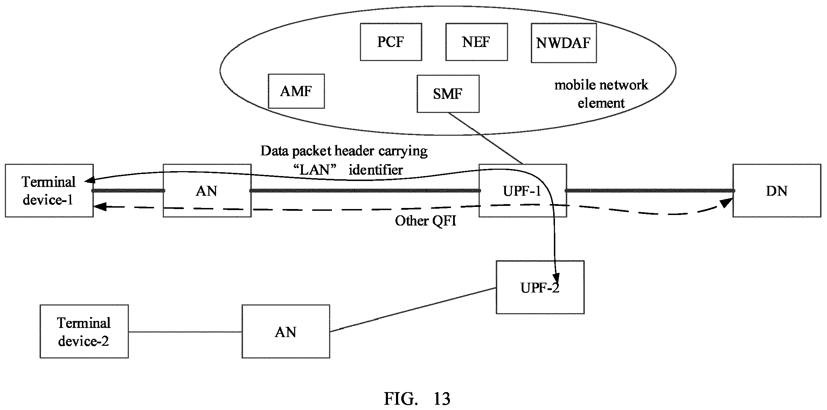

As shown in FIG. 13, during the establishment of the PDU session, the network device informs the terminal device that the first identifier is "LAN", and the data packet carrying the identifier "LAN" is used for data transmission in the local area network.

When the first terminal device (UE-1) needs to transmit related data, the UE-1 carries the identifier "LAN" in the header of the data packet carrying the related data, and the first UPF entity (UPF-1) forwards the data packet to the second UPF entity (UPF-2) according to the identifier "LAN". The UPF-2 may further forward the data packet to the second terminal device (UE-2). Alternatively, the UPF-1 directly forwards the data packet to UE-2 according to the identifier.

In the data transmission method provided by the embodiments of the present application, the first identifier is transmitted by the mobile network element to the terminal device or the network device or the UPF entity, so that the terminal device, or network device, or the UPF entity can know the purpose (function) of the data packet of first identifier, and then the terminal device, or the network device, or the UPF entity can transfer data packets with the network element corresponding to the first identifier, so that the core network control plane network element can realizes data applications such as big data analysis and network status monitoring according to the user plane data, which improves the application scope of the data.

It should be understood that, in various embodiments of the present application, the size of the sequence numbers of the above-mentioned processes does not mean the order of execution, and the execution order of each process should be determined by its functions and internal logic, and shall not constitute any limitation to the process of implementation of the embodiments of the present application.

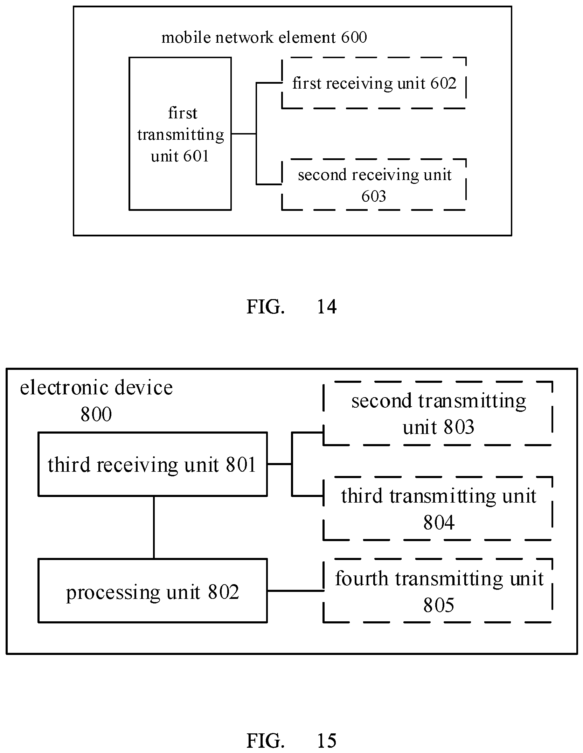

To implement the above data transmission method, an example not claimed by the invention provides a mobile network element. An optional structural schematic diagram of the mobile network element 600, as shown in FIG. 14, includes:
a first transmitting unit 601, configured to transmit a first identifier to an electronic device, wherein the first identifier is used for transmitting a data packet between the electronic device and a network element corresponding to the first identifier.

In some embodiments, the mobile network element further includes: a first receiving unit 602, configured to receive a first request message, wherein the first request message is used to request to acquire the first identifier.

In some embodiments, the first transmitting unit 601 is further configured to transmit a first correspondence, wherein the first correspondence comprises: a correspondence between the first identifier and the network element, and/or a correspondence between the first identifier and a service.

In some embodiments, the mobile network element further includes:
a second receiving unit 603, configured to receive a second request message, wherein the second request message is used to request to acquire the first correspondence.

In some embodiments, the network element includes an NEF entity, and in other examples not covered by the invention, the network element may also include at least any one of: an NWDAF entity, a PCF entity, and an NWDAF entity corresponding to a first network slice.

In some embodiments, the service includes at least any one of: a data analysis services and a LAN services.

In some embodiments, the first correspondence is carried in a QoS parameter; or the first correspondence is transmitted as a parameter independent of the QoS parameter.

In some embodiments, in a case where the first correspondence is carried in the QoS parameter, the first correspondence is determined according to a first parameter in the QoS parameter.

In some embodiments, the QoS parameters may include, but are not limited to, one or more of the following: packet filter, Garanteed Biterate, Non-Garanteed Biterate, Maximum Bit Rate, Packet Delay Budget, Packet Error Rate, 5QI, and Preemption priority parameter. The packet filter may include one or more of the following: IP5 tuple, Type Of Service (IPV4)/Traffic class (IPV6), and data flow direction.

In some embodiments, the first correspondence is carried in an N2 message and/or an NAS message.

In some embodiments, a usage of the first identifier is configured in a dynamic or static manner; or the usage of the first identifier is default.

In some embodiments, the first identifier is carried in a QoS parameter; or the first identifier is transmitted as a parameter independent of the QoS parameter.

In some embodiments, the first identifier is carried in an N2 message and/or an NAS message.

In some embodiments, the first identifier includes at least any one of: a QoS flow ID and/or a PDU session ID; a service ID; and a server ID.

In some embodiments, the mobile network element includes is an SMF entity, and in other examples not covered by the invention, the mobile network element may also be at least any one of: an AMF entity and a PCF entity.

In some embodiments, the electronic device include a user plane functional entity UPF, and in other examples not covered by the invention, the electronic device may also include at least one of: a terminal device, a wireless network device, a core network device.

In some embodiments, the mobile network element is applied to at least one of: a PDU session establishment process, a PDU session modification process, a registration process and a service request process.

To implement the above data transmission method, an embodiment of the present application provides an electronic device. An optional structural schematic diagram of the electronic device 800, as shown in FIG. 15, includes:
a third receiving unit 801, configured to receive a first identifier, wherein the first identifier is used for transmitting a data packet between the electronic device and a network element corresponding to the first identifier.
a processing unit 802, configured to add the first identifier to the data packet.

In some embodiments, the electronic device 800 further includes:
a second transmitting unit 803, configured to transmit a first request message to the mobile network element, wherein the first request message is used to request to acquire the first identifier.

In some embodiments, the third receiving unit 801 is configured to receive a first correspondence,
wherein the first correspondence includes: a correspondence between the first identifier and the network element, and/or a correspondence between the first identifier and a service.

In some embodiments, the electronic device 800 further includes:
a third transmitting unit 804, configured to transmit a second request message to the mobile network element, wherein the second request message is used to request to acquire the first correspondence.

In some embodiments, the service includes at least any one of: a data analysis services and a LAN services.

In some embodiments, the first correspondence is carried in a QoS parameter; or the first correspondence is transmitted as a parameter independent of the QoS parameter.

In some embodiments, in a case where the first correspondence is carried in the QoS parameter, the first correspondence is determined according to a first parameter in the QoS parameter.

In some embodiments, the QoS parameters may include, but are not limited to, one or more of the following: packet filter, Garanteed Biterate, Non-Garanteed Biterate, Maximum Bit Rate, Packet Delay Budget, Packet Error Rate, 5QI, and Preemption priority parameter. The packet filter may include one or more of the following: IP5 tuple, Type Of Service (IPV4)/Traffic class (IPV6), and data flow direction.

In some embodiments, the first correspondence is carried in an N2 message and/or an NAS message.

In some embodiments, the network element includes an NEF entity, and in other examples not covered by the invention, the network element may also include at least any one of: an NWDAF entity, a PCF entity, and an NWDAF entity corresponding to a first network slice.

In some embodiments, a usage of the first identifier is configured in a dynamic or static manner; or the usage of the first identifier is default.

In some embodiments, the first identifier is carried in a QoS parameter; or the first identifier is transmitted as a parameter independent of the QoS parameter.

In some embodiments, the first identifier is carried in an N2 message and/or an NAS message.

In some embodiments, the first identifier includes at least any one of: a QoS flow ID and/or a PDU session ID; a service ID; and a server ID.

In some embodiments, the electronic device 800 further includes:
a fourth transmitting unit 805, configured to transmit the data packet to a user plane functional entity, so that the user plane functional entity transmits the data packet to the network element according to the first identifier.

In some embodiments, the electronic device 800 includes: a terminal device and/or a network device.

In some embodiments, the electronic device is applied to at least one of: a PDU session establishment process, a PDU session modification process, a registration process and a service request process.

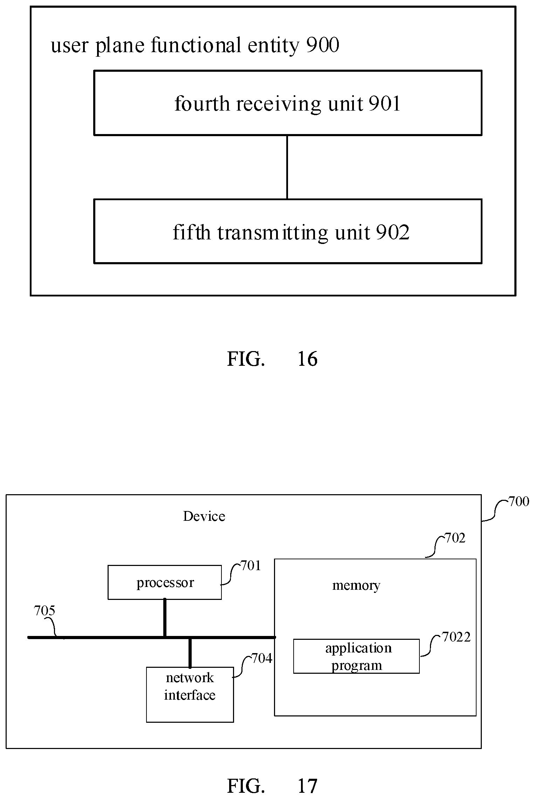

To implement the above data transmission method, an example not claimed by the invention provides a user plane functional entity. An optional structural schematic diagram of the user plane functional entity 900, as shown in FIG. 16, includes:
a fourth receiving unit 901, configured to receive a data packet carrying a first identifier, wherein the first identifier is used for transmitting the data packet between the user plane functional entity and a network element corresponding to the first identifier; and
a fifth transmitting unit 902, configured to transmit the data packet to the network element according to the first identifier.

In some embodiments, the fifth transmitting unit 902 is configured to transmit a third request message to the mobile network element, wherein the third request message is used to request to acquire the first identifier and/or a first correspondence.

In some embodiments, the first correspondence includes: a correspondence between the first identifier and the network element, and/or a correspondence between the first identifier and a service.

In some embodiments, the service includes at least any one of: a data analysis services and a LAN services.

In some embodiments, the first correspondence is carried in a QoS parameter; or the first correspondence is transmitted as a parameter independent of the QoS parameter.

In some embodiments, in a case where the first correspondence is carried in the QoS parameter, the first correspondence is determined according to a first parameter in the QoS parameter.

In some embodiments, the QoS parameters may include, but are not limited to, one or more of the following: packet filter, Garanteed Biterate, Non-Garanteed Biterate, Maximum Bit Rate, Packet Delay Budget, Packet Error Rate, 5QI, and Preemption priority parameter. The packet filter may include one or more of the following: IP5 tuple, Type Of Service (IPV4)/Traffic class (IPV6), and data flow direction.

In some embodiments, the first correspondence is carried in an N2 message and/or a non-access stratum NAS message.

In some embodiments, the first identifier is carried in a QoS parameter; or the first identifier is transmitted as a parameter independent of the QoS parameter.

In some embodiments, a usage of the first identifier is configured in a dynamic or static manner; or the usage of the first identifier is default.

In some embodiments, the first identifier is carried in an N2 message and/or an NAS message.

In some embodiments, the first identifier includes at least any one of: a QoS flow ID and/or a PDU session ID; a service ID; and a server ID.

In some embodiments, the network element includes at least one of: a network element of core network, a terminal device, a network device, a functional module in the user plane functional entity, an entity co-located with the user plane functional entity, and another user plane functional entity other than the user plane functional entity.

In some embodiments, the user plane functional entity is applied to at least one of: a PDU session establishment process, a PDU session modification process, a registration process and a service request process.

FIG. 17 is a schematic diagram of a hardware structure of a device (the mobile network element, the electronic device, or the user plane functional entity) according to an example not claimed by the invention. The device 700 includes: at least one processor 701, a memory 702, and at least one network interface 704. The various components in device 700 are coupled together by bus system 705. It can be understood that the bus system 705 is used to implement the connection communication between these components. In addition to a data bus, the bus system 705 also includes a power bus, a control bus and a status signal bus. However, for the sake of clarity, the various buses are labeled as bus system 705 in FIG. 17.

It will be appreciated that memory 702 may be volatile memory or non-volatile memory, and may include both volatile and non-volatile memories. The non-volatile memory may be ROM, programmable read-only memory (PROM), erasable programmable read-only memory (EPROM), electrically erasable programmable read-only memory (EEPROM), ferromagnetic random access memory (FRAM), flash memory, magnetic surface memory, optical disc, or compact disc read-only memory (CD-ROM), wherein magnetic surface memory can be disk memory or tape memory. The volatile memory may be random access memory (RAM), which is used as an external cache memory. By way of example and not limitation, many forms of RAM are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), synclink dynamic random access memory (SLDRAM), direct rambus random access memory (DRRAM). The memory 702 described in the embodiments of the present disclosure is intended to include, but not limited to, these and any other suitable types of memory.

The memory 702 in this embodiment of the present disclosure is used to store various types of data to support the operation of the device 700. Examples of such data include: any computer program used to operate on device 700, such as application program 7022. The program for implementing the method of the embodiment of the present disclosure may be included in the application program 7022.

The methods disclosed in the above embodiments of the present disclosure may be applied to the processor 701 or implemented by the processor 701. The processor 701 may be an integrated circuit chip with signal processing capability. In the implementation process, each step of the above-mentioned method can be completed by an integrated logic circuit of hardware in the processor 701 or an instruction in the form of software. The above-mentioned processor 701 may be a general-purpose processor, a digital signal processor (DSP), or other programmable logic devices, discrete gate or transistor logic devices, discrete hardware components, and the like. The processor 701 may implement or execute the methods, steps, and logical block diagrams disclosed in the embodiments of this disclosure. A general-purpose processor may be a microprocessor or any conventional processor or the like. The steps of the method disclosed in the embodiments of the present disclosure can be directly embodied as being executed by a hardware decoding processor, or executed by a combination of hardware and software modules in the decoding processor. The software module may be located in a storage medium, and the storage medium is located in the memory 702, and the processor 701 reads the information in the memory 702, and completes the steps of the foregoing method in combination with its hardware.

In an exemplary embodiment, the device 700 may be implemented by one or more application specific integrated circuit (ASIC), DSP, programmable logic device (PLD), complex programmable logic device (CPLD), FPGA, general-purpose processor, controller, MCU, MPU, or other electronic component implementation for performing the above method.

The present disclosure is described with reference to flowchart illustrations and/or block diagrams of methods, apparatus (systems), and computer program products according to embodiments of the present disclosure. It will be understood that each process and/or block in the flowchart illustrations and/or block diagrams, and combinations of processes and/or blocks in the flowchart illustrations and/or block diagrams, can be implemented by computer program instructions. These computer program instructions may be provided to the processor of a general purpose computer, dedicated computer, embedded processor or other programmable data processing device to produce a machine such that the instructions executed by the processor of the computer or other programmable data processing device produce a means for implementing the functions specified in one process or multiple processes in the flowchart and/or one block or multiple blocks in the block diagram.

These computer program instructions may also be stored in a computer-readable memory capable of directing a computer or other programmable data processing apparatus to function in a particular manner, such that the instructions stored in the computer-readable memory result in an article of manufacture including instruction means, wherein the instruction means implements the functions specified in one process or multiple processes in the flowchart and/or one block or multiple blocks in the block diagram.

These computer program instructions can also be loaded on a computer or other programmable data processing device to cause a series of operational steps to be performed on the computer or other programmable device to produce a computer-implemented process such that the instructions provide steps for implementing the functions specified in one process or multiple processes in the flowchart and/or one block or multiple blocks in the block diagram.

It should be understood that the terms "system" and "network" in this disclosure are often used interchangeably herein. The term "and/or" in this disclosure is only an association relationship to describe associated objects, indicating that there can be three kinds of relationships, for example, A and/or B, it can mean the three cases of only A, both A and B, and only B. In addition, the character "/" in this disclosure generally indicates that the related objects have an "or" relationship.

## Claims

1. A method for data transmission, the method comprising:
receiving (S301), by an electronic device, a first identifier from a mobile network element, wherein the first identifier is used for transmitting a data packet between the electronic device and a network exposure function, NEF, entity corresponding to the first identifier; and
adding (S302), by the electronic device, the first identifier to the data packet,
wherein the mobile network element comprises a session management function, SMF, entity, and wherein the electronic device comprises a user plane functional, UPF, entity.

2. The method according to claim 1, further comprising:
transmitting, by the electronic device, a first request message to a mobile network element, wherein the first request message is used to request to acquire the first identifier.

3. The method according to claim 1 or 2, wherein a usage of the first identifier is configured in a static manner.

4. The method according to any one of claims 1 to 3, wherein the first identifier being used for transmitting the data packet between the electronic device and the NEF entity corresponding to the first identifier, comprises:
the first identifier being used for transmitting, by the electronic device, the data packet to the NEF entity corresponding to the first identification, according to a service executed according to the first identification.

5. The method according to any one of claims 1 to 4, further comprising:
receiving, by the electronic device, a first correspondence,
wherein the first correspondence comprises: a correspondence between the first identifier and the NEF, and/or a correspondence between the first identifier and a service.

6. The method according to claim 5, further comprising:
transmitting, by the electronic device, a second request message to the mobile network element, wherein the second request message is used to request to acquire the first correspondence.

7. The method according to any one of claims 1 to 5, wherein the first identifier comprises at least any one of:
a service ID; and
a server ID.

8. An electronic device (800) comprising:
a third receiving unit (801), configured to receive a first identifier from a mobile network element, wherein the first identifier is used for transmitting a data packet between the electronic device and a network exposure function, NEF, entity corresponding to the first identifier; and
a processing unit (802), configured to add the first identifier to the data packet,
wherein the mobile network element comprises a session management function, SMF, entity, and wherein the electronic device comprises a user plane functional, UPF, entity.

9. The electronic device according to claim 8, further comprising:
a second transmitting unit, configured to transmit a first request message to the mobile network element, wherein the first request message is used to request to acquire the first identifier.

10. The electronic device according to claim 8 or 9, wherein a usage of the first identifier is configured in a static manner.

11. The electronic device according to any one of claim 8 to 10, wherein the first identifier being used for:
transmitting, by the electronic device, the data packet to the NEF entity corresponding to the first identification, according to a service executed according to the first identification.

12. The electronic device according to any one of claim 8 to 11, wherein the third receiving unit is configured to receive a first correspondence,
wherein the first correspondence comprises: a correspondence between the first identifier and the NEF, and/or a correspondence between the first identifier and a service.

13. The electronic device according to claim 12, further comprising:
a third transmitting unit, configured to transmit a second request message to the mobile network element, wherein the second request message is used to request to acquire the first correspondence.

14. The electronic device according to any one of claims 8 to 13, wherein the first identifier comprises at least any one of:
a service ID; and
a server ID.

## Patentansprüche

1. Verfahren zur Datenübertragung, wobei das Verfahren Folgendes umfasst:
Empfangen (S301), durch ein elektronisches Gerät, einer ersten Kennung von einem mobilen Netzwerkelement, wobei die erste Kennung zum Übertragen eines Datenpakets zwischen dem elektronischen Gerät und einer der ersten Kennung entsprechenden Netzwerkexpositionsfunktions-, NEF-, Entität verwendet wird; und
Hinzufügen (S302), durch das elektronische Gerät, der ersten Kennung zu dem Datenpaket,
wobei das mobile Netzwerkelement eine Sitzungsverwaltungsfunktions-, SMF-, Entität umfasst, und wobei das elektronische Gerät eine Benutzerebenenfunktions-, UPF-, Entität umfasst.

2. Verfahren nach Anspruch 1, ferner umfassend:
Übertragen, durch das elektronische Gerät, einer ersten Anforderungsnachricht an ein mobiles Netzwerkelement, wobei die erste Anforderungsnachricht verwendet wird, um ein Erhalten der ersten Kennung anzufordern.

3. Verfahren nach Anspruch 1 oder 2, wobei eine Verwendung der ersten Kennung auf statische Weise konfiguriert ist.

4. Verfahren nach einem der Ansprüche 1 bis 3, wobei die Verwendung der ersten Kennung zum Übertragen des Datenpakets zwischen dem elektronischen Gerät und der der ersten Kennung entsprechenden NEF-Entität Folgendes umfasst:
Verwenden der ersten Kennung zum Übertragen, durch das elektronische Gerät, des Datenpakets an die der ersten Kennzeichnung entsprechende NEF-Entität gemäß einem Dienst, der gemäß der ersten Kennzeichnung ausgeführt wird.

5. Verfahren nach einem der Ansprüche 1 bis 4, ferner umfassend:
Empfangen, durch das elektronische Gerät, einer ersten Entsprechung,
wobei die erste Entsprechung Folgendes umfasst: eine Entsprechung zwischen der ersten Kennung und der NEF und/oder eine Entsprechung zwischen der ersten Kennung und einem Dienst.

6. Verfahren nach Anspruch 5, ferner umfassend:
Übertragen, durch das elektronische Gerät, einer zweiten Anforderungsnachricht an das mobile Netzwerkelement, wobei die zweite Anforderungsnachricht verwendet wird, um ein Erhalten der ersten Entsprechung anzufordern.

7. Verfahren nach einem der Ansprüche 1 bis 5, wobei die erste Kennung mindestens eines von Folgendem umfasst:
eine Dienst-ID; und
eine Server-ID.

8. Elektronisches Gerät (800), umfassend:
eine dritte Empfangseinheit (801), die dazu konfiguriert ist, eine erste Kennung von einem mobilen Netzwerkelement zu empfangen, wobei die erste Kennung zum Übertragen eines Datenpakets zwischen dem elektronischen Gerät und einer der ersten Kennung entsprechenden Netzwerkexpositionsfunktions-, NEF-, Entität verwendet wird; und
eine Verarbeitungseinheit (802), die dazu konfiguriert ist, die erste Kennung zu dem Datenpaket hinzuzufügen,
wobei das mobile Netzwerkelement eine Sitzungsverwaltungsfunktions-, SMF-, Entität umfasst, und wobei das elektronische Gerät eine Benutzerebenenfunktions-, UPF-, Entität umfasst.

9. Elektronisches Gerät nach Anspruch 8, ferner umfassend:
eine zweite Übertragungseinheit, die dazu konfiguriert ist, eine erste Anforderungsnachricht an das mobile Netzwerkelement zu übertragen, wobei die erste Anforderungsnachricht verwendet wird, um ein Erhalten der ersten Kennung anzufordern.

10. Elektronisches Gerät nach Anspruch 8 oder 9, wobei eine Verwendung der ersten Kennung auf statische Weise konfiguriert ist.

11. Elektronisches Gerät nach einem der Ansprüche 8 bis 10, wobei die erste Kennung für Folgendes verwendet wird:
Übertragen, durch das elektronische Gerät, des Datenpakets an die der ersten Kennzeichnung entsprechende NEF-Entität gemäß einem Dienst, der gemäß der ersten Kennzeichnung ausgeführt wird.

12. Elektronisches Gerät nach einem der Ansprüche 8 bis 11, wobei die dritte Empfangseinheit dazu konfiguriert ist, eine erste Entsprechung zu empfangen,
wobei die erste Entsprechung Folgendes umfasst: eine Entsprechung zwischen der ersten Kennung und der NEF und/oder eine Entsprechung zwischen der ersten Kennung und einem Dienst.

13. Elektronisches Gerät nach Anspruch 12, ferner umfassend:
eine dritte Übertragungseinheit, die dazu konfiguriert ist, eine zweite Anforderungsnachricht an das mobile Netzwerkelement zu übertragen, wobei die zweite Anforderungsnachricht verwendet wird, um ein Erhalten der ersten Entsprechung anzufordern.

14. Elektronisches Gerät nach einem der Ansprüche 8 bis 13, wobei die erste Kennung mindestens eines von Folgendem umfasst:
eine Dienst-ID; und
eine Server-ID.

## Revendications

1. Procédé de transmission de données, le procédé comprenant les étapes consistant à :
recevoir (S301), par un dispositif électronique, un premier identifiant provenant d'un élément de réseau mobile, le premier identifiant étant utilisé pour transmettre un paquet de données entre le dispositif électronique et une entité de fonction d'exposition de réseau, NEF, correspondant au premier identifiant ; et
ajouter (S302), par le dispositif électronique, le premier identifiant au paquet de données,
dans lequel l'élément de réseau mobile comprend une entité de fonction de gestion de session, SMF, et dans lequel le dispositif électronique comprend une unité fonctionnelle de plan d'utilisateur, UPF.

2. Procédé selon la revendication 1, comprenant également l'étape consistant à :
transmettre, par le dispositif électronique, un premier message de demande à un élément de réseau mobile, le premier message de demande étant utilisé pour demander l'acquisition du premier identifiant.

3. Procédé selon la revendication 1 ou 2, dans lequel un usage du premier identifiant est configuré de manière statique.

4. Procédé selon l'une quelconque des revendications 1 à 3, dans lequel l'utilisation du premier identifiant pour transmettre le paquet de données entre le dispositif électronique et l'entité NEF correspondant au premier identifiant comprend :
l'utilisation du premier identifiant pour transmettre, par le dispositif électronique, le paquet de données à l'entité NEF correspondant à la première identification, en fonction d'un service exécuté en fonction de la première identification.

5. Procédé selon l'une quelconque des revendications 1 à 4, comprenant également l'étape consistant à :
recevoir, par le dispositif électronique, une première correspondance,
dans lequel la première correspondance comprend : une correspondance entre le premier identifiant et la NEF, et/ou une correspondance entre le premier identifiant et un service.

6. Procédé selon la revendication 5, comprenant également l'étape consistant à :
transmettre, par le dispositif électronique, un deuxième message de demande à l'élément de réseau mobile, le deuxième message de demande étant utilisé pour demander l'acquisition de la première correspondance.

7. Procédé selon l'une quelconque des revendications 1 à 5, dans lequel le premier identifiant comprend au moins un élément parmi :
un ID de service ; et
un ID de serveur.

8. Dispositif électronique (800), comprenant :
une troisième unité de réception (801), configurée pour recevoir un premier identifiant provenant d'un élément de réseau mobile, le premier identifiant étant utilisé pour transmettre un paquet de données entre le dispositif électronique et une entité de fonction d'exposition de réseau, NEF, correspondant au premier identifiant ; et une unité de traitement (802), configurée pour ajouter le premier identifiant au paquet de données,
dans lequel l'élément de réseau mobile comprend une entité de fonction de gestion de session, SMF, et dans lequel le dispositif électronique comprend une unité fonctionnelle de plan d'utilisateur, UPF.

9. Dispositif électronique selon la revendication 8, comprenant également :
une deuxième unité de transmission, configurée pour transmettre un premier message de demande à l'élément de réseau mobile, le premier message de demande étant utilisé pour demander l'acquisition du premier identifiant.

10. Dispositif électronique selon la revendication 8 ou 9, dans lequel un usage du premier identifiant est configuré de manière statique.

11. Dispositif électronique selon l'une quelconque des revendications 8 à 10, dans lequel le premier identifiant est utilisé pour :
transmettre, par le dispositif électronique, le paquet de données à l'entité NEF correspondant à la première identification, en fonction d'un service exécuté en fonction de la première identification.

12. Dispositif électronique selon l'une quelconque des revendications 8 à 11, dans lequel la troisième unité de réception est configurée pour recevoir une première correspondance,
dans lequel la première correspondance comprend : une correspondance entre le premier identifiant et la NEF, et/ou une correspondance entre le premier identifiant et un service.

13. Dispositif électronique selon la revendication 12, comprenant également :
une troisième unité de transmission, configurée pour transmettre un deuxième message de demande à l'élément de réseau mobile, le deuxième message de demande étant utilisé pour demander l'acquisition de la première correspondance.

14. Dispositif électronique selon l'une quelconque des revendications 8 à 13, dans lequel le premier identifiant comprend au moins un élément parmi :
un ID de service ; et
un ID de serveur.
